Europäisches Patentamt

European Patent Office

Office européen des brevets

(11) Numéro de publication: **0 191 692**
**B1**

(12) **FASCICULE DE BREVET EUROPEEN**

(45) Date de publication du fascicule du brevet: **09.01.91**

(21) Numéro de dépôt: **86400222.5**

(22) Date de dépôt: **03.02.86**

(51) Int. Cl.⁵: **H 02 G 3/00**

(54) Dispositif de commutation centralisée pour réseau électrique de bâtiment.

(30) Priorité: **08.02.85 FR 8501800**

(43) Date de publication de la demande:
**20.08.86 Bulletin 86/34**

(45) Mention de la délivrance du brevet:
**09.01.91 Bulletin 91/02**

(84) Etats contractants désignés:
**AT BE CH DE FR GB IT LI LU NL SE**

(56) Documents cités:
**DE-A-2 311 751**
**FR-A-2 170 253**
**FR-A-2 242 792**
**FR-A-2 311 433**
**FR-A-2 389 260**

**Figaro Magazine, 17.12.88, page 18**

(73) Titulaire: **Nozick, Jacques E.**
**C.T.M. 28 rue Broca**
**F-75005 Paris (FR)**

(73) Titulaire: **Lepaillier, Patrick**
**6 rue Gabrielle**
**F-92140 Clamart (FR)**

(72) Inventeur: **Nozick, Jacques E.**
**C.T.M. 28 rue Broca**
**F-75005 Paris (FR)**
Inventeur: **Lepaillier, Patrick**
**6 rue Gabrielle**
**F-92140 Clamart (FR)**

(74) Mandataire: **Pinguet, André**
**Cabinet de Proprieté Industrielle CAPRI 28 bis,**
**avenue Mozart**
**F-75016 Paris (FR)**

Courier Press, Leamington Spa, England.

## Description

La présente invention a pour objet un dispositif de commutation centralisée pour un réseau électrique de bâtiment.

L'invention cherche à permettre des modifications faciles de l'installation, ainsi qu'à améliorer la sécurité. Le brevet français 2 170 253 (Siemens) décrit une installation comportant des organes utilisateurs électriques à BT usuelle (220, 380) montés sur des circuits fixes. Ils ne sont pas commandés directement mais sont commandés par un réseau TBT (4 V ou moins). Les conducteurs TBT sont des lignes en feuille, avec des émetteurs extrémement plats, qui se présentent sous forme d'un ruban plat pouvant être collé sans canal contre une paroi. Les modifications des lignes TBT sont faciles, les lignes peuvent être posées en un temps très court, avec peu d'outillage. Les faibles puissances de commande augmentent la sécurité et évitent tout danger provoqué par la haute tension de contact. En un endroit central sont prévus des relais ou des convertisseurs entre les circuits à tensions différentes.

La présente invention a pour but une disposition comportant des circuits BT et des circuits TBT avec des modules de relais, dans laquelle des modifications ou des adaptations de toutes sortes du circuit électrique d'un bâtiment peuvent être réalisées sans avoir à modifier l'installation, y compris le circuit TBT.

Par conséquent la présente invention a pour objet un dispositif de commutation centralisée pour réseau électrique de bâtiment comportant un nombre de circuits de puissance BT constitués chacun par un précâblage fixe connecté à une première extrémité à un récepteur dans le bâtiment, et à une seconde extrémité à un module de relais, disposé dans ledit dispositif centralisé, commandé par une entrée à très basse tension TBT, le circuit TBT dans le relais étant isolé galvaniquement du circuit BT, un nombre de circuits de commande à très basse tension constitués chacun par un précâblage fixe connecté à une première extrémité à un actionneur dans le bâtiment, et à la second extrémité dans ledit dispositif centralisé, caractérisé en ce que le dispositif comprend deux séries de contacts, une première série de contacts connectés chacun à une entrée TBT d'un relais, et une seconde série de contacts auxquels sont connectées les secondes extrémités des circuits de commande, tout contact de la première série pouvant être connecté à tout contact de la seconde série au moyen d'une jarretière.

Selon une caractéristique de l'invention, les modules de relais sont électriquement et mécaniquement indépendants les uns des autres, sont interchangeables et peuvent remplir des fonctions différentes. Un module peut comporter un opto-coupleur, un télérupteur ou une minuterie. Le dispositif de l'invention comporte avantageusement un boîtier d'alimentation du circuit de commande. Les séries de contacts peuvent être constituées par des réglettes. Au moins une réglette peut comporter des moyens électroniques de traitement de signaux de commande, qui peuvent comporter un récepteur codeur pour signaux infrarouges.

Selon un mode de réalisation de l'invention, le circuit de commande comporte au moins une réglette comprenant deux séries de bornes, les bornes d'une première série étant reliées entre elles, les bornes de la seconde série étant indépendantes. Les deux extrémités de chaque boucle de commande sont connectées, l'une à une borne d'une série, l'autre à une borne de l'autre série. La première série de bornes est raccordée à une première borne d'alimentation commune du circuit de commande, et la borne de la seconde série, qui est connectée à une extrémité d'une boucle du circuit de commande, est connectée également à une extrémité d'une jarretière dont l'autre extrémité est connectée à une seconde borne d'alimentation du circuit de commande.

Selon un autre mode de réalisation de l'invention, le circuit de commande comporte au moins deux réglettes, lune comportant plusieurs barrettes indépendantes de bornes reliées entre elles, l'autre comprenant deux séries de bornes, les bornes d'une première série étant reliées entre elles, les bornes de la seconde série étant indépendantes. Les deux extrémités de chaque boucle de commande sont connectées à cette dernière réglette, l'une à une borne d'une série, l'autre à une borne de l'autre série. La première série de bornes est raccordée à une première borne d'alimentation commune du circuit de commande, et la borne de la seconde série, qui est connectée à une extrémité d'une boucle du circuit de commande, est connectée également à une extrémité d'une jarretière dont l'autre extrémité est connectée à une borne d'une barrette de la réglette comprenant plusieurs barrettes indépendantes de bornes reliées entre elles, ladite borne étant raccordée à une seconde borne d'alimentation du circuit de commande au moyen d'une autre jarretière.

Selon une caractéristique de l'invention, les réglettes comportant deux séries de bornes, communes aux deux modes de réalisation donnés à titre d'exemple, peuvent ne constituer qu'un simple relais de connexion entre les boucles du circuit de commande et l'organe de commutation centralisée, mais elles peuvent aussi comporter des moyens de traitement électronique des signaux de commande.

D'autres caractéristiques et avantages de la présente description apparaîtront mieux à la lecture de la description suivante faite en relation avec les dessins annexés, sur lesquels:

la figure 1 est une vue de face schématique d'un répartiteur au niveau duquel est effectuée la commutation centralisée d'un circuit de puissance et du circuit basse tension de commande du précédent au moyen d'un premier mode de réalisation du dispositif de commutation selon l'invention;

la figure 2 est une vue de face schématique d'un répartiteur au niveau duquel est effectuée la commutation centralisée d'un circuit de puissance et du circuit basse tension de commande du précédent au moyen d'un second mode de réalisation du dispositif de commutation selon l'invention;

la figure 3 est un schéma de câblage simplifié d'un bloc de commutation comportant un module de commutation; et

la figure 4 est une vue en perspective d'un mode de réalisation d'un bloc de commutation dont les éléments sont fixés sur un radiateur.

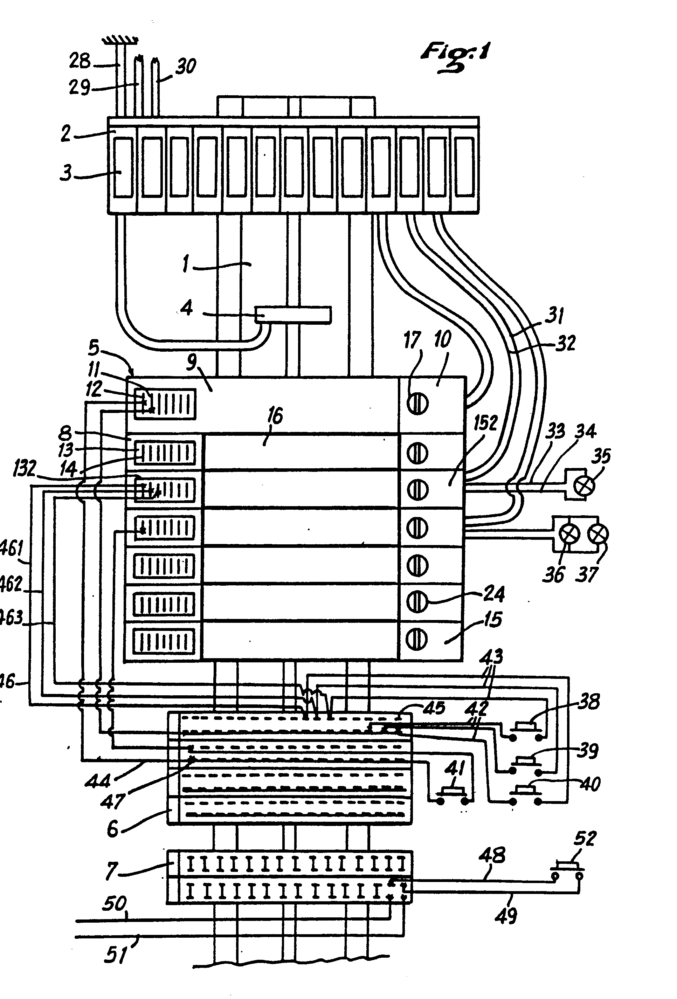

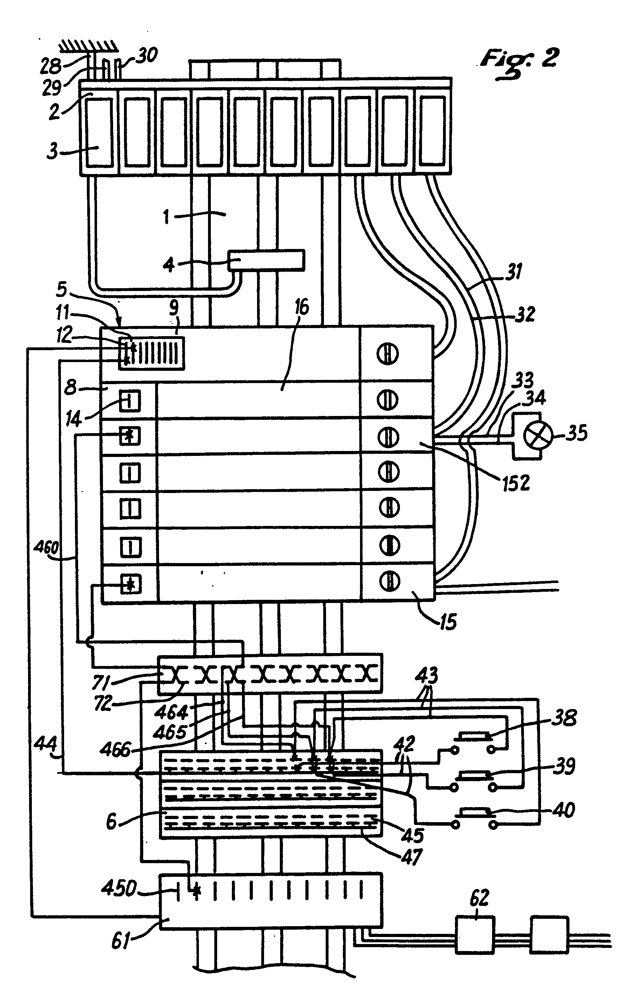

Les figures 1 et 2 représentent deux modes de réalisation différents d'un dispositif de commutation centralisé entre un circuit de puissance et le circuit de commande basse tension correspondant, réalisé au niveau d'un répartiteur. (Les éléments communs aux deux modes de réalisation sont repérés sur les deux figures par les mêmes chiffres). Ce répartiteur comporte un profilé 1 rainuré sur lequel sont assujettis, avantageusement par encliquetage, une batterie de bornes d'alimentation 2 protégées par des éléments de protection thermique 3 (fusibles, bilames ou équivalents), un bornier terre 4, un bloc 5 de commutation de puissance, des réglettes 6 et/ou 61, une (ou plusieurs) réglette(s) 71 (cas du dispositif représenté sur la figure (2) et, éventuellement, des réglettes 7.

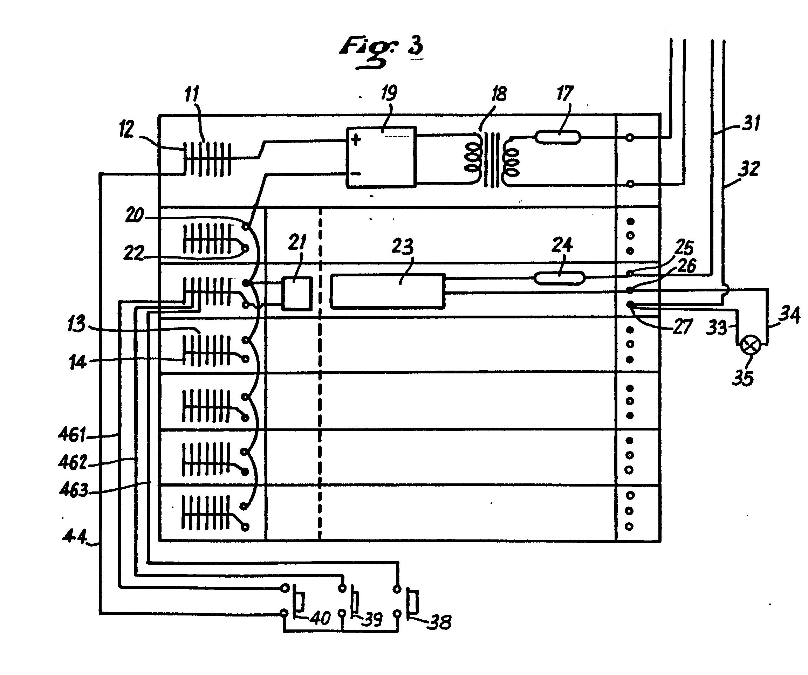

Le bloc 5 de commutation de puissance comporte un tableau 8 surmonté d'un boîtier 9 fixe alimenté par une borne 10 et contenant le dispositif d'alimentation du circuit de commande basse tension. Le tableau 8 comporte plusieurs barrettes de commande 13 de bornes 14 (sur le mode de réalisation représenté sur la figure 2, ces barrettes 13 de bornes 14 se réduisent à une borne 14 unique) correspondant à autant de bornes 15 d'entrée/sortie de puissance. Entre chaque barrette 13 et la borne 15 correspondante, le tableau 8 reçoit un module 16 de commutation de puissance amovible, avantageusement enfichable. Sur la figure 3, on voit que le dispositif d'alimentation du circuit de commande comporte un élément de protection thermique 17 (fusible ou équivalent), un transformateur d'isolement 18 fournissant un courant basse tension (inférieur à 24 volts) à partir du courant délivré par le secteur, et, avantageusement, un organe de redressement 19 (pont de diodes ou équivalent) dudit courant basse tension. L'une des bornes de ce dispositif d'alimentation (borne+sur le schéma) est reliée à une barrette 11 de bornes 12, l'autre borne (borne—sur le schéma) est reliée à une série de plots 20 situés au niveau de chaque barrette 13 (ou au niveau de chaque borne 14 sur le mode de réalisation représenté sur la figure 2). Chaque module 16 comporte un organe de relais 21, avantageusement électronique (muni d'un opto-coupleur ou équivalent), connecté au plot 20 et à un plot 22 relié à chaque barrette 13 (ou à chaque borne 14 sur le mode de réalisation représenté sur la figure 2); un élément de commutation 23 du circuit de puissance, isolé galvaniquement du circuit de commande auquel appartient l'organe de relais 21 et pouvant assurer diverses fonctions (télérupteur, télévariateur, minuterie, etc.). Cet élément de commutation 23 est protégé par un élément de protection thermique 24 et est connecté à un plot 25 d'entrée de phase, à un plot 26 de sortie de phase commandée et éventuellement à un plot 27 de neutre.

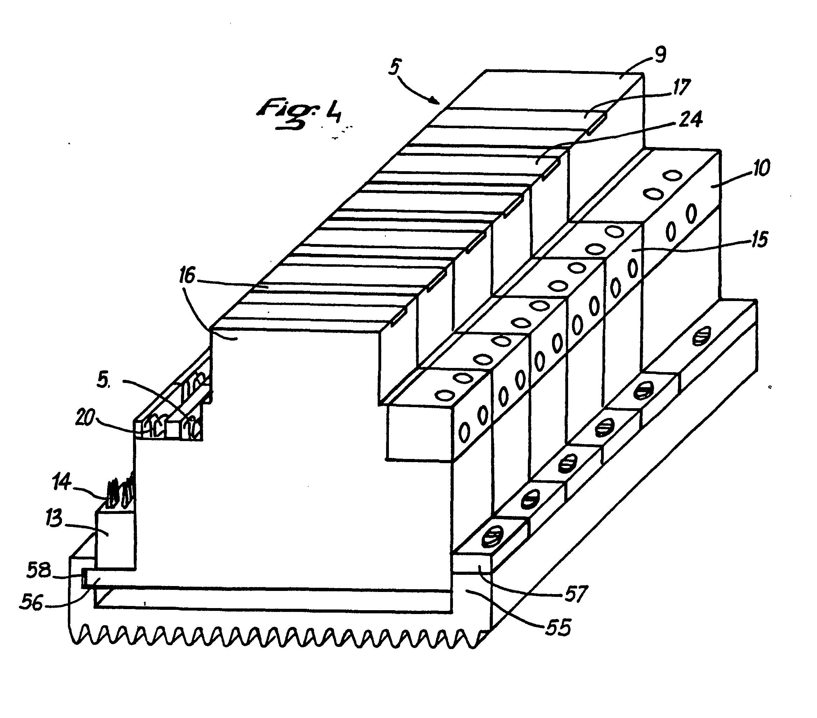

On a représenté sur la figure 4 une vue en perspective d'un modèle particulier de réalisation du bloc de commutation 5. Le bloc comporte un radiateur 55 sur lequel sont assujettis un boîtier 9 et des modules 16 (au nombre de cinq sur la figure). Chacun de ces éléments mobiles est muni de deux pattes de fixation 56, 57. La patte 56 pénètre dans une gorge 58 du radiateur 55, tandis que la patte 57 est vissée sur un épaulement du radiateur 55. Les modules 16 représentés sur cette figure comportent chacun une borne 20 pour le circuit de commande et une borne 59 neutre ne servant qu'à la commande du relais de puissance.

Les deux circuits composant le réseau électrique d'un bâtiment sont raccordés aux différents éléments portés par le profilé 1 de la façon suivante. Le circuit de puissance est alimenté par une batterie de bornes 2 reliées au secteur (phase 29; neutre 30; terre 28, connectée au bornier terre 4). Une de ces bornes 2 est raccordée à la borne du boîtier 9 d'alimentation du circuit de commande. D'autre bornes 2 sont raccordées chacune à une borne d'entrée/sortie 15 correspondant à un module 16. A chaque borne 15 arrivent donc deux câbles 31, 32, provenant d'une borne 2; deux câbles 33, 34 en repartent, qui sont connectés ou à une source de lumière 35 (ou de courant) ou à plusieurs sources de lumière 36, 37 (ou de courant) destinées à être alimentées simultanément, ou à un ou plusieurs appareils électriques (moteurs d'actionnement de portes, de stores, par exemple, radiateurs, etc.). On appelle ''boucle'' du circuit de puissance un circuit comportant deux câbles 33, 34 et la ou les sources de lumière ou de courant ou les appareils électriques qu'ils alimentent. Les câbles 31, 32, 33, 34 qui sont parcourus par le courant du secteur sont soumis, quant à leur section, à l'épaisseur de la gaine isolante qui les recouvre et au trajet qu'on leur fait emprunter, à la réglementation de l'EDF.

Sur le réseau de commande du mode de réalisation représenté sur les figures 1 et 3, les connexions sont effectuées de la façon suivante. Dans chaque pièce du bâtiment, on dispose un certain nombre d'actionneurs 38, 39, 40, 41 (boutons poussoirs, interrupteurs ou équivalents. Un exemple de moyen d'actionnement d'un autre type est décrit plus bas en relation avec la figure 2) dans les endroits qui semblent à priori offrir le plus de commodités, compte tenu du lieu d'implantation des diverses sources de lumière, sources de courant et appareils électriques commandés éventuels. Sur les figures 1 et 3, on a représenté un exemple de câblage où trois actionneurs 38, 39, 40 peuvent commander une source de lumière 35 et où un actionneur 41 peut commander deux sources de lumières 36, 37 disposées en parallèle. A partie de ces actionneurs on file une paire de fils 42, 43 jusqu'au répartiteur. Les paires de fils utilisées sur le circuit de commande alimenté en courant basse tension par le transformateur d'isolement 18 sont de faible section (du type des paires de fils utilisées en téléphonie). Elles présentent l'intérêt d'être peu coûteuses, peu encombrantes et de ne pas tomber, quant au trajet qu'on leur fait emprunter, sous le coup de la réglementation qui touche le circuit de puissance. De la sorte, on peut les déplacer facilement au gré des convenances ou des besoins. Lorsqu'il apparaît souhaitable d'effectuer le regroupement de paires de fils avant le répartiteur, au niveau d'une pièce par exemple, on prévoit d'utiliser un bornier universel de raccordement comportant avantageusement une connectique autodénudante. Au niveau du répartiteur, les paires de fils 42, 43 sont avantageusement connectées aux bornes (avantageusement munies de contacts autodénudants) d'une réglette 6, qui peut n'être qu'un simple relais de connexion ou comporter des moyens de traitement des signaux de commande commen ce le verra plus loin). A priori, lorsque la réglette 6 utilisée n'est qu'un simple relais de connexion, on pourrait raccorder chaque paire de fils 42, 43 directement aux bornes du bloc de commutation 5; le fil 42 à une borne 12, le fil 43 à une borne 14. Cependant, l'utilisation des réglettes 6 comme relais de connexion entre les paires de fils 42, 43 et le bloc de commutation 5 permet une souplesse dans l'etablissement de connexions beaucoup plus grande). Les fils 42 sont connectés aux bornes 47 du commun de la réglette 5, lequel est relié par un fil 44 à une borne 12 de la barrette 11. Les fils 43 sont connectés à des bornes 45, indépendantes les unes des autres, de la même réglette, lesquelles sont raccordées également chacune à un fil 46, appelé "jarretière". (On appelle "boucle" du circuit de commande un circuit comportant deux fils 42, 43, les fils 44, 46 auxquels ils sont respectivement reliés et l'actionneur qui leur est connecté). On connecté l'extrémité libre de chaque jarretière 46 à une borne 14 de la barrette 13 correspondant à la borne d'entrée/sortie 15 du circuit de puissance par laquelle se fait l'alimentation de la source de lumière, de la source de courant ou de l'appareil commandé par l'actionneur raccordé à ladite jarretière. A titre d'exemple, sur la figure 1 les jarretières 461, 462, 463, qui sont raccordées à une extrémité à trois bornes d'une même réglette 6 reliées à trois actionneurs 38, 39, 40 sont connectées à leur autre extrémité à trois bornes 14 de la barrette 132 qui correspond à la borne d'entrée/sortie 152 par laquelle se fait l'alimentation de la source lumineuse 35 commandée par les actionneurs 38, 39, 40. La connexion des jarretières 46 aux bornes 14 doit pouvoir être effectuée aisément de façon que, s'il apparaît, une fois le réseau électrique installé, que tel actionneur est mieux placé pour commander telle source de lumière ou de courant que celle à laquelle il a été affecté initialement, on puisse déplacer quasi instantanément la jarretière raccordée à cet actionneur et la connecter à une borne d'une autre barrette 13. A cet effet, les bornes 14 des barrettes 13 peuvent être munies avantageusement de contacts autodénudants. Le dispositif selon l'invention permet donc de modifier très facilement l'affectation d'un actionneur.

Le réseau de commande du mode de réalisation représenté sur la figure 2 diffère de celui qui est représenté sur la figure 1 en ce qu'il comporte, en plus de la (ou des) réglette(s) 6, une (ou plusieurs) réglette(s) 71 comprenant plusieurs barrettes, indépendantes les unes des autres, de bornes 72, avantageusement à contacts autodénudants. Le tableau 8 du bloc de commutation 5 est modifié en conséquence et ne comporte donc plus, au niveau de chaque module 16, qu'une borne 14 unique pour le raccordement d'une jarretière 460 (au lieu que, sur le mode de réalisation représenté sur la figure 1, le tableau 8 comporte, au niveau de chaque module 16, une barrette 13 de plusieurs bornes 14 pour le raccordement éventuel de plusieurs jarretières 46). Au niveau de répartiteur, la connexion des fils 42, 43 aux bornes 47, 45 des réglettes 6 s'effecte comme il a été décrit précédemment en relation avec la figure 1. Cependant les bornes 45 ne sont plus ici raccordées directement aux bornes 14 d'une barrette 13 du tableau 8, mais aux bornes 72 d'une barrette d'une réglette 71. Ainsi, dans ce mode de réalisation, c'est sur les réglettes 71 que s'effectue le regroupement des boucles du circuit de commande correspondant à une même boucle du circuit de puissance. A titre d'exemple, les trois fils 43 des trois actionneurs 38, 39, 40 sont connectés à trois bornes 45 d'une réglette 6. Ces trois bornes 45 sont ensuite raccordées au moyen de trois jarretières 464, 465, 466 à trois bornes 72 d'une même barrette d'une réglette 71. A une autre borne 72 de cette même barrette, enfin, est raccordée une extrémité d'une jarretière 460, dont l'autre extrémité est raccordée à une borne 14 correspondant à la borne d'entrée/sortie de puissance 152 de la boucle de puissance commandée par les actionneurs 38, 39, 40. Comme il apparaît clairement, ce mode de réalisation particulier du dispositif selon l'invention permet de simplifier considérablement la connectique entre le bloc de commutation 5 et les réglettes.

Sur la figure 2, outre les réglettes 6 et 71, on a représenté une réglette 61 dont la caractéristique est de comporter des moyens électroniques du traitement des signaux de commande. Cette réglette 61 peut être par exemple une réglette d'alarme ou une réglette comportant un récepteur-décodeur pour télécommande infrarouge. Dans le cas d'un réseau d'alarme, la (ou les) boucle(s) du circuit de commande concernée(s) comporte(nt) des capteurs 62 (contacts de feuillures, cellules photo-électriques, radars volumétriques, etc.), et la (ou les) boucle(s) du circuit de puissance concernée(s), divers appareils, tels que sirènes d'alarme, moyen de blocage de portes, etc. Dans le cas d'un réseau de télécommande infrarouge, la (ou les) boucle(s) du circuit de commande concernée(s) comporte(nt) des préamplificateurs infrarouges 62, répartis adéquatement, excitables au moyen d'un boîtier de commande portatif, et la ou les boucle(s) du circuit de puissance concernée(s), tous types de moyen d'éclairage et d'appareils électriques. Naturellement, ce type de réglette est utilisable aussi bien sur le mode de réalisation du dispositif selon l'invention représenté sur la figure 1 que sur celui qui est représenté sur la figure 2. Dans les deux cas, le raccordement de la (ou des) réglette(s) 61 est identique à celui d'une réglette 6.

Avantageusement, pour former les boucles du circuit de commande, on prévoit d'utiliser des câbles comportant un nombre de paires de fils égal à celui des paires de bornes des réglettes 6 et 7, lesdites bornes et lesdits fils étant repérés individuellement par des couleurs différentes se correspondant respectivement. Cela permettrait de simplifier considérablement l'affectation des paires de fils au niveau des répartiteurs et de réaliser un précâblage systématique de l'installation rendant inutile tout plan de câblage.

C'est par l'intermédiaire des modules 16 que les ordres donnés en divers points du circuit de commande sont transmis aux sources de lumière, aux sources de courant et aux divers appareils électriques situés sur le circuit de puissance. Ces modules assurent chacun une fonction de commutation unique (télérupteur, télévariateur, minuterie, etc.). Comme ils sont amovibles, il est très facile de changer la nature de la commutation établie entre un actionner et la source de lumière ou de courant qu'il commande. Cependant, pour certaines applications particulières, on prévoit un module universel pouvant assurer plusieurs fonctions programmables.

Un répartiteur tel que celui qui est représenté sur les figures 1 ou 2 peut être installé à chaque étage d'un bâtiment ou dans chaque appartement d'un étage.

Comme il peut se trouver qu'on ait besoin de commander par un actionneur relié à un répartieur une source de lumière, un appareil, etc, relié à un autre répartiteur, on équipe chaaue répartiteur de réglettes 7 servant de relais de connexion entre répartiteurs. Par exemple, la paire de fils 48, 49 filée depuis un actionneur 52 jusqu'au répartiteur de la figure 1 est connectée à deux bornes d'une réglette 7. Deux fils 50, 51 connectés à deux bornes de la même réglette reliées aux précédentes, sont filés jusqu'à une réglette 6 d'un autre répartiteur (non représenté) où ils sont connectés.

L'installation dans un bâtiment d'un réseau électrique comportant deux circuits, —circuit de puissance et circuit de commande basse tension— reliés comme il a été décrit plus haut, présente de multiples avantages:

—isolation galvanique du circuit de commande. De plus, l'utilisation de la basse tension sur ce circuit où les interventions risquent d'être les plus fréquentes garantit la sécurité des manipulateurs;

—totale liberté de câblage du circuit de commande, laquelle permet, compte tenu du très faible encombrement et du coût modeste des conducteurs basse tension, de réaliser très facilement des modifications de tous ordres sur ledit circuit de commande;

—possibilité de changer, sans aucune modification de l'installation, l'affectation des actionneurs ainsi que le mode de commutation qui leur est associé grâce à l'utilisation des jarretières 461, 462, 463 reliant les réglettes 6 aux bornes 13 (ou des jarretières 460, 464, 465, 466 reliant les réglettes 6 à une borne 14 par l'intermédiaire d'une réglette 71) et à la disposition modulaire du bloc de commutation, chaque module 16 étant mobile et assurant un mode de commutation particulier;

—possibilité d'utiliser des modules de commutation de puissance électronique totalement silencieux;

—possibilité d'utiliser des actionneurs (boutons poussoirs) totalement silencieux et de regrouper lesdits actionneurs sous forme de claviers ultra-plats;

—regroupement des commandes en un ensemble très compact (répartiteur) pouvant être relié à d'autres ensembles du même type situés dans des corps de logement ou à des étages différents.

## Revendications

1. Dispositif de commutation centralisée pour réseau électrique de bâtiment comportant un nombre de circuits de puissance BT constitués chacun par une précâblage fixe connecté à une première extrémité à un récepteur (35, 37) dans le bâtiment, et à une seconde extrémité à un module de relais (16), ledit module étant amovible et disposé dans ledit dispositif centralisé, commandé par une entrée à très basse tension TBT, le circuit TBT dans le relais étant isolé galvaniquement du circuit BT, un nombre de circuits de commande à très basse tension constitués chacun par un précâblage fixe (42, 43) connecté à une première extrémité à un actionneur (38, 41) dans le bâtiment, et à la seconde extrémité dans ledit dispositif centralisé, caractérisé en ce que le dispositif comprend deux séries de contacts, une première série de contacts (11, 12) connectés chacun à une entrée TBT d'un relais, et une seconde série de contacts (45) auxquels sont connectées les secondes extrémités des circuits de commande (43), tout contact (11, 12) de la première série pouvant être connecté à tout contact (45) de la seconde série au moyen d'une jarretière (44, 46, 461).

2. Dispositif de commutation selon la revendication 1, caractérisé en ce que les modules de relais (16) sont électriquement et mécaniquement indépendants les uns des autres, sont interchangeables et peuvent remplir des fonctions différentes.

3. Dispositif de commutation selon la revendication 2, caractérisé en ce qu'un module de relais (16) comporte un opto-coupleur.

4. Dispositif de commutation selon une des revendications 2 ou 3, caractérisé en ce qu'un module de relais de commutation (16) comporte en outre un télérupteur.

5. Dispositif de commutation selon une des revendications 2 ou 3, caractérisé en ce qu'un module de relais (16) comporte un télévariateur.

6. Dispositif de commutation selon une des revendications 2 ou 3, caractérisé en ce qu'un module de relais (16) comporte une minuterie.

7. Dispositif de commutation selon une des revendications précédentes, caractérisé en ce que le bloc de commutation (5) comporte en outre un boîtier (9) d'alimentation du circuit de commande.

8. Dispositif de commutation selon une des revendications précédentes, caractérisé en ce qu'il comporte au moins une réglette (61) comprenant des moyens électroniques de traitement de signaux de commande.

9. Dispositif de commutation selon la revendication 8, caractérise en ce que les moyens électroniques de traitement de signaux de commande de la réglette (61) comportent un récepteur-décodeur pour signaux infrarouges.

10. Dispositif de commutation selon une des revendications précédentes, où les boucles du circuit de commande comportent des câbles comprenant des paires de fils téléphoniques, caractérisé en ce que chaque câble comporte autant de paires de fils que les réglettes (6) de paires de bornes (45, 47) et en ce que les fils et les bornes sont repérés individuellement par des couleurs se correspondant respectivement.

## Patentansprüche

1. Zentrale Schaltvorrichtung für Stromnetze von Gebäuden, bestehend aus einer Reihe von Niederstrom-Schaltkreisen, von denen jeder wiederum aus einer festen Vorverkabelungsbesteht die an einem Ende an einen Empfänger (35, 37) im Gebäude und am anderen Ende an ein Relais-Modul (16) angeschlossen ist, welches abnehmbar in der zentralen Schaltvorrichtung eingebaut ist und über einen Niedrigstromeingang gesteuert wird, wobei der Niedrigststromkreis galvanisch von dem Niederstromkreis getrennt ist und eine Reihe von Niedrigstrom-Steuerkreisen aus je einer festen Vorverkabelung (42, 43) besteht, die an einem Ende an ein Betätigungselement (38, 41) im Gebäude und am anderen Ende an die zentrale Schaltvorrichtung angeschlossen ist, dadurch gekennzeichnet, daß sich die Vorrichtung aus zwei Kontaktreihen zusammensetzt, wobei die Kontakte (11, 12) der ersten Reihe jeweils mit dem Niedrigststrom-Eingang eines Relais und die Kontakte (45) der zweiten Reihe jeweils mit dem zweiten Ende der Steuerkreise (43) verbunden sind, sodaß jeder Kontakt (11, 12) der ersten Reihe über eine Schaltstrippe (44, 46, 461) mit jedem Kontakt (45) der zweiten Reihe verbunden werden kann.

2. Schaltvorrichtung nach Patentanspruch 1, dadurch gekennzeichnet, daß die Relais-Module (16) elektrisch und mechanisch voneinander unabhängig und austauschbar sind und daß sie unterschiedliche Funktionen Haben können.

3. Schaltvorrichtung nach Patentanspruch 2, dadurch gekennzeichnet, daß ein Relais-Modul (16) einen Optokoppler besitzt.

4. Schaltvorrichtung nach Patentanspruch 2 und 3, dadurch gekennzeichnet, daß ein Relais-Modul zusätzlich einen Fernschalter besitzt.

5. Schaltvorrichtung nach Patentanspruch 2 und 3, dadurch gekennzeichnet, daß ein Relais-Modul zusätzlich einen Fernvariator besitzt.

6. Schaltvorrichtung nach Patentanspruch 2 und 3, dadurch gekennzeichnet, daß ein Relais-Modul zusätzlich einen Zeitschalter besitzt.

7. Schaltvorrichtung nach einem beliebigen der o.a. Patentansprüche, dadurch gekennzeichnet, daß der Schaltblock (5) zusätzlich über einen Stromversorgungskasten (9) für den Steuerkreis verfügt.

8. Schaltvorrichtung nach einem beliebigen der o.a. Patentansprüche, dadurch gekennzeichnet, daß sie mindestens eine Kontaktleiste (61) mit elektronischen Mitteln zur Verarbeitung von Steuersignalen besitzt.

9. Schaltvorrichtung nach Patentanspruch 8, dadurch gekennzeichnet, daß die elektronischen Mittel zur Verarbeitung von Steuersignalen auf der Kontaktleiste (61) einen Empfänger-Decoder für Infrarotsignale enthalten.

10. Schaltvorrichtung nach einem beliebigen der o.a. Patentansprüche, bei denen die Steuerschleifen, aus Telefonkabeln mit einem oder mehreren Adernpaaren bestehen, dadurch gekennziechnet, daß jedes dieser Kabel dieselbe Anzahl Adernpaare besitzt wie die Zahl der Klemmen (45, 47) der Kontaktleisten (61) und daß die Adern und Klemmen jeweils entsprechend farblich gekennzeichnet sind.

## Claims

1. A centralized switching device for an electrical network in a building, said switching device comprising a number of low voltage power circuits each composed of a fixed prewiring connected at a first end to a receiver (35, 37) in the building, and at a second end to a switching module (16), said module being removably disposed in said centralized device and controlled by a very low voltage inlet, the very low voltage circuit in the switch being galvanically isolated from the low voltage circuit, a number of very low voltage control circuits each composed of a fixed prewiring (42, 43) connected at a first end to a control means (38, 41) in the building, and at a second end to said centralized device, characterized in that the device comprises two series of contacts, a first series of contacts (11, 12) each connected to a very low voltage inlet of a switch, and a second series of contacts (45) to which are connected the second ends of said control circuits (43), every contact (11, 12) of the first series being able to be connected to any contact of the second series by means of a jumper (44, 46, 461).

2. A switching device according to claim 1, characterized in that said switching modules (16) are electrically and mechanically independent from one another, they are interchangeable and they can have different functions.

3. A switching device according to claim 2, characterized in that a switching module (16) includes an optocoupler.

4. A switching device according to any of claims 2 and 3, characterized in that a switching module (16) further includes a remote ON/OFF switch.

5. A switching device according to any of claims 2 and 3, characterized in that a switching module (16) includes a remote dimmer.

6. A switching device according to any of claims 2 and 3, characterized in that a switching module (16) includes a timer.

7. A switching device according to any of the preceding claims, characterized in that the switching block (5) further includes a power supply box (9) for the control circuit.

8. A switching device according to any of the preceding claims, characterized in that it includes at least one terminal strip (61) which includes electronic means for processing control signals.

9. A switching device according to claim 8, characterized in that said electronic means for processing control signals of the terminal strip (61) include a receiver/decoder for infrared signals.

10. A switching device according to any of the preceding claims, wherein the loops of the control circuit include cables having pairs of wires of the type used for telephone installations, characterized in that the number of pairs of wires in each cable corresponds to the number pairs of terminals (45, 47) in each terminal strip (6) and the wires and the terminals are individually marked by color codes respectively corresponding to each other.

Fig.1

*Fig. 2*

Fig. 3

EP 0 191 692 B1

Fig. 4